(19) Europäisches Patentamt

European Patent Office

Office européen des brevets

(11) EP 0 629 022 B1

(12) **EUROPEAN PATENT SPECIFICATION**

(45) Date of publication and mention
of the grant of the patent:
**19.03.1997 Bulletin 1997/12**

(51) Int Cl.⁶: **H01R 13/115**, H01M 2/10

(21) Application number: **94303843.0**

(22) Date of filing: **27.05.1994**

(54) **Cell with terminals and circuit substrate**

Knopfzelle mit Anschlüssen und Leiterplatte

Cellule de type bouton avec languettes de connexion et substrat de circuit

(84) Designated Contracting States:
**DE FR GB**

(30) Priority: **07.06.1993 JP 135799/93**
**30.08.1993 JP 213693/93**

(43) Date of publication of application:
**14.12.1994 Bulletin 1994/50**

(73) Proprietor: **MATSUSHITA ELECTRIC INDUSTRIAL**
**CO., LTD.**
**Kadoma-shi, Osaka-fu, 571 (JP)**

(72) Inventors:
• **Daio, Fumio**
**Kitakatsuragi-gun, Nara-ken (JP)**
• **Mizutani, Seiichi**
**Hirakata-shi (JP)**

(74) Representative: **Sorrell, Terence Gordon et al**
**Fitzpatricks,**
**Cardinal Court,**
**23, Thomas More Street**
**London E1 9YY (GB)**

(56) References cited:
**EP-A- 0 427 976       EP-A- 0 532 301**
**US-A- 2 506 524**

• **PATENT ABSTRACTS OF JAPAN vol. 17, no. 222**
**(M-1404) 7 May 1993 & JP-A-04 355 191**
• **PATENT ABSTRACTS OF JAPAN vol. 12, no. 20**
**(E-575) 21 January 1988 & JP-A-62 177 866**
• **PATENT ABSTRACTS OF JAPAN vol. 17, no. 165**
**(E-1343) 30 March 1993 & JP-A-04 324 242**
• **PATENT ABSTRACTS OF JAPAN vol. 16, no. 417**
**(E-1258) 3 September 1992 & JP-A-04 141 971**

## Description

The present invention relates to a cell assembly having terminals by which a cell can be detachably mounted to a circuit substrate and to a circuit substrate having terminals for detachably mounting a cell.

Generally, a primary or a secondary cell such as a lithium or an alkali cell or the like shaped like a coin, a button or a cylinder is frequently used as a backup power source for memories in electronic instruments or the like. Terminals are mounted on the cell by resistance welding, laser welding (YAG laser, exima laser or $CO_2$ laser) or the like and the cell is directly mounted on a circuit substrate by soldering the terminals thereto. Thus, an operation for changing the cell at a service time or at the time the guaranteed life of the cell service life ends is difficult. Further, it is desirable to recycle a cell which uses various kinds of metallic oxides and rare metals such as lithium, zinc and the like. For this reason, as disclosed in the Japanese Patent Unexamined Publication No. 60-131753 and Japanese Patent Publication No. 3-40464, a cell holder has been employed in which a cell can easily be retrieved.

Where the cell is mounted on the cell holder, a space for receiving the cell holder on a circuit substrate is required. In view of recent miniaturisation or electronic devices, it is difficult to provide a space for receiving the cell holder on the circuit substrate.

The present invention intends to solve the above-discussed problems, and an object of the invention is to provide a cell with terminals which allow easy exchange of the cell and in which a fixing strength of the cell is excellent, or alternatively, to provide a circuit substrate.

Accordingly, one aspect of the present invention provides a cell assembly comprising: a cell with terminal surfaces; and a pair of terminal elements attached to the terminal surfaces of the cell; characterised in that each of said terminal elements comprises an engaging portion for receiving one of a pair of mating terminal elements of a device to which the cell assembly is to be attached; and that said engaging portion of each of said terminal elements comprises peripheral ends which are bent to form an interior region and a first surface with an opening, and a second surface with a projection projecting partially into the interior region from the second surface.

A second aspect of the present invention provides a circuit assembly comprising: a circuit substrate; and a pair of terminal elements mounted on the substrate; characterised in that each of the terminal elements comprises an engaging portion for receiving one of a pair of mating terminal elements of a cell which is to be mounted on the substrate; and that the engaging portion of each of said terminal elements comprises peripheral ends which are bent to form an interior region and a first surface with an opening, and a second surface with a projection projecting partially into the interior region from the second surface.

The foregoing and further features of the present invention will be more readily understood from the following description of preferred embodiments with reference to the drawings of which:-

Fig. 1 is a front elevational view showing a coin-shaped cell which is provided with a pair of terminal elements according to a first embodiment of the present invention;
Fig. 2 is a top plan view showing the coin-shaped cell of Fig. 1;
Fig. 3 is a side elevational view showing the coin-shaped cell of Fig. 1;
Fig. 4 is a front elevational view of the coin-shaped cell of Fig. 1 in which a pair of plain-plate like terminal elements of a mating device are fitted respectively in the terminal elements of the cell;
Fig. 5 is a cross-sectional view of a principal portion of a terminal along line V-V of Fig. 4;
Fig. 6 is a front elevational view showing a coin-shaped cell which is provided with a pair of terminal elements according to a second embodiment of the present invention;
Fig. 7 is a front elevational view showing the coin-shaped cell of Fig. 6;
Fig. 8 is a side elevational view showing the coin-shaped cell of Fig. 6;
Fig. 9 is a front elevational view of the coin-shaped cell of Fig. 6 in which a pair of plain-plate like terminal elements of a mating device are fitted respectively in the terminal elements of the cell;
Fig. 10 is a cross-sectional view of a principal portion of a terminal along line X-X of Fig. 9; and
Fig. 11 is a side elevational diagrammatic view showing a third embodiment of the present invention.

The description will be given as an example of a cell which is provided with a pair of terminal elements according to the present invention on respective surfaces of the cell.

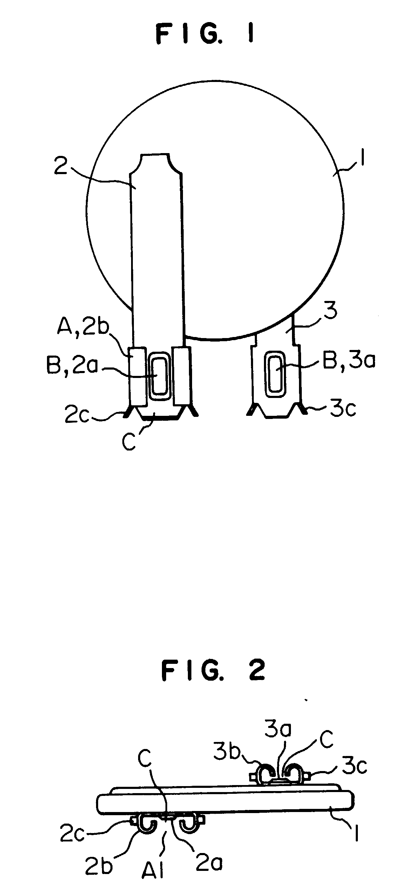

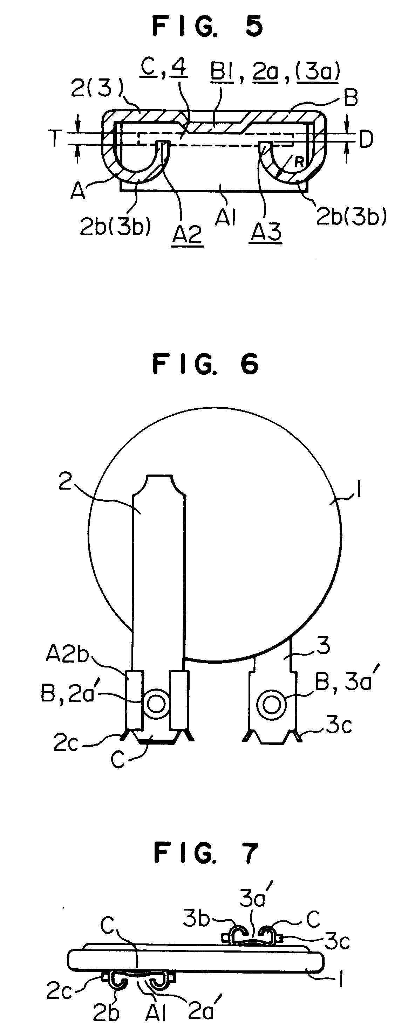

Fig. 1 is a front elevational view showing terminal elements 2 and 3 according to the present invention which are welded and fixed respectively to terminal surfaces of respective positive and negative poles of a coin-shaped lithium cell 1, by means of laser welding. The terminal elements 2 and 3 each have a forward end thereof which defines an engaging-portion $\underline{C}$. Each engaging portion C comprises peripheral portions (2b, 3b) bent to form an opening (A1) in a surface $\underline{A}$, as shown in an enlarged cross-sectional view of a principal portion in Fig. 5, and a projection (2a, 3a) partially projecting inwardly from another surface $\underline{B}$. The reference characters 2c and 3c denote terminal insertion guides or positioning guides for mounting on the terminals of the mating equipment.

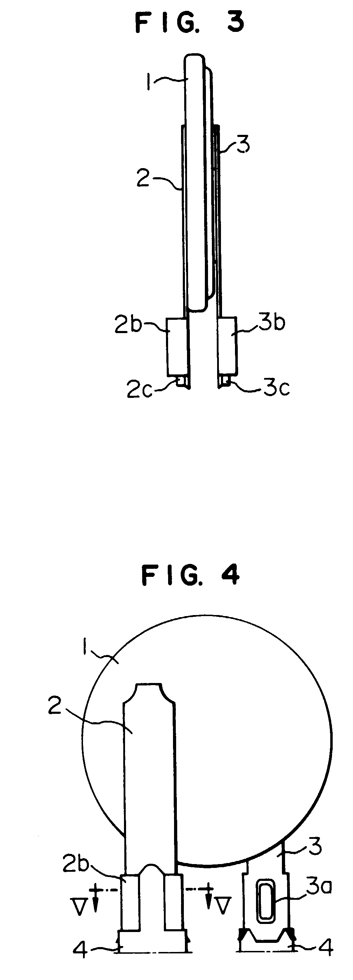

Fig. 2 is a top plan view of Fig. 1, while Fig. 3 is a side elevational view of Fig. 1.

Fig. 4 is a front elevational view showing the cell 1 with a pair of mating plain-plate like terminal elements 4 fitted respectively in the engaging-portion C of the terminals 2 and 3. Fig. 5 is a cross-sectional view taken along line V-V in Fig. 4. Accordingly, Fig. 5 shows a cross-section of one of the terminals with a plain-plate like terminal element 4 of the mating device fitted therein. The terminal elements 4 are engaged with and fixedly mounted on, respectively, the terminal elements according to the present invention. That is, they are engaged with and fixedly mounted on by means of crimping. The arrangement is such that, for a spacing between forward-end surfaces A2 and A3 of the peripheral portions (2b, 3b) and a forward-end surface B1 of the projection given as D, and a wall thickness of each of the mating terminal elements 4 given as T, then, D and T satisfy the following relationship indicated by the equation (2).

$$T - D \geq 0.1 \text{ to } 0.5 \tag{2}$$

The terminal elements according to the present invention are formed from a metallic material whose wall thickness is 0.15 to 1.0 mm, whose Vickers hardness is 250 to 450 HV, and whose spring elastic modulus is 30 to 60 kgf/mm$^2$. The reason why the wall thickness must be 0.15 to 1.0 mm is as follows. Where the terminal elements are mounted respectively on terminal surfaces of a cell by a method such as laser welding, resistance welding, ultrasonic welding or the like, great heat generation occurs upon welding in a case where the wall thickness is equal to or more than 1.0 mm. Accordingly, the material within the cell can be damaged.

Where the wall thickness is equal to or less than 0.15 mm, even if the material of the terminals is a material within the range or scope of the invention, ie one in which the spring elastic modulus is 30 - 60 kgf/mm$^2$, and the Vickers hardness is 250 - 450 HV, no problem under a normal oscillation condition is encountered. However, under the oscillation condition which can occur upon conveyance such as by a truck or the like, detachment occurs because of an insufficient mounting strength. This is undesirable. Furthermore, the reason why the Vickers hardness is 250 - 450 HV and the spring elastic modulus is 30 - 60 kgf/mm$^2$ is that the material in which the Vickers hardness is less than 250 HV and the spring limit value is less than 30 kgf/mm$^2$ has conventionally been used as terminal material of this kind. However, material of this order is too weak and low in strength to be used in the invention, and is not used for the following reason. That is, in a case of where the material has a spring limit value of 30 kgf/mm$^2$, repeated mounting and demounting of the cell causes the spring restoring force to deteriorate. In a case where the Vickers hardness is less than 250 HV, ie for material which is soft upon insertion, and whose wall thickness is less than 0.15 mm, demounting of the terminal causes the terminals to become deformed. In a case where the Vickers hardness is equal to or more than 450 HV, since the hardness of the material is too high with respect to oscillation, there are many cases where the terminal elements break due to stress concentration. Further, when the terminal elements are bent into an arcuate form, it is sufficient that, normally, the radius of curvature is of the order of twice the wall thickness. However, processing cannot be performed if the radius of curvature is of the order of five times the wall thickness. This is not desirable for space-saving reasons.

Accordingly, the material of the terminal elements and the material of the terminals to be mounted therein are substantially the same in wall thickness to each other, the wall thickness being within a range of 0.15 mm to 1.0 mm, the Vickers hardness being 250 to 450 HV, and the spring elastic modulus being within a range of from 30 to 60 kgf/mm$^2$.

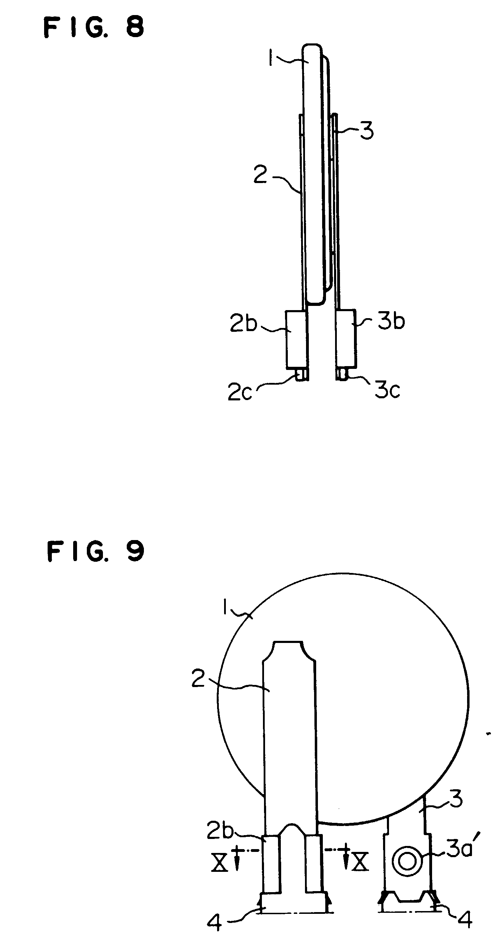

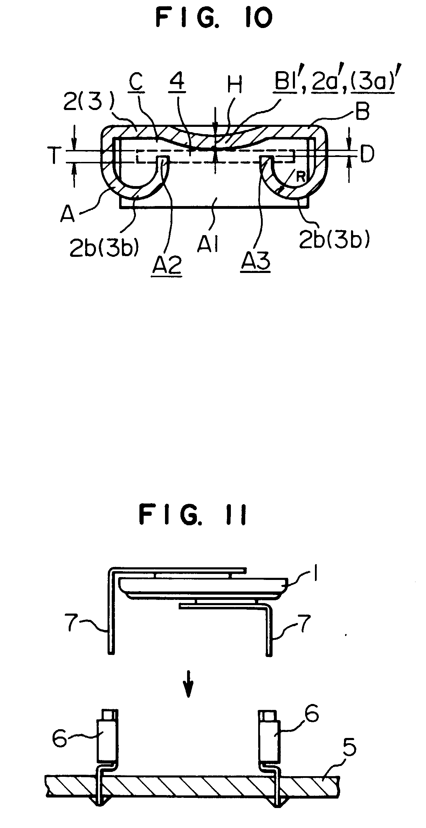

Figs. 6 to 10 show a second embodiment according to the present invention. The arrangement of this embodiment is similar to that of the first embodiment illustrated in Figs. 1 to 5 except that the projections 2a and 3a which project inwardly from the surfaces B of the terminal elements 2 and 3 comprise spherical segments 2a' and 3a'. Further $B_1'$ denotes a forward end surface of the spherical segment.

The rate of occurrence of defective contact for terminal elements according to the present invention used to package a manganese dioxide lithium cell CR 2020 with terminals as shown in Fig. 1 being mounted and demounted 50 times and 500 times, and the rate of occurrence of cell detachment under an oscillation test carried out under an oscillation experimental condition of MIL-STD-202E are indicated in (TABLE 1) and (TABLE 2) respectively.

(TABLE 1) shows experimental results which establish the relationship between an engaging-portion spatial distance D of the terminals according to the present invention and the wall thickness T of the material of the plain-plate like terminal elements to be mounted therein. The results show the case where nickel material whose wall thickness is 0.15 mm, whose Vickers hardness is 350 HV and whose spring elastic modulus is 35 kgf/mm$^2$ is used as a terminal element material, while (TABLE 2) shows the results of the case where nickel material whose wall thickness is 0.5 mm, whose Vickers hardness is 300 HV, and whose spring elastic modulus is 32 kgf/mm$^2$ is used. (TABLE 3) shows the comparison between terminal element material in which the wall thickness of each of the terminal elements to be mounted is 0.3 mm and one has a material according to the present invention, specifically, material whose Vickers hardness is 300 HV, whose spring elastic modulus is 40 kgf/mm$^2$ and the other has a conventional material, specifically, material whose Vickers hardness is 230 HV and whose spring elastic modules is 25 kgf/mm$^2$ as terminal element material. In this connection, either of the terminal element materials comprise stainless steel, and the experiment was carried out on terminals being bent such that the curvature R of bends in the terminals is twice the wall thickness.

TABLE 1

| | T-D value | Rate of Occurence of Contact Defective (%) | | Cell Detachment Rate Due to Oscillation Experiment (%) |
|---|---|---|---|---|
| | | 50 times | 500 times | |
| ① | 0 | 1 | 3 | 18 |
| ② | 0.05 | 0 | 3 | 10 |
| ③ | 0.1 | 0 | 0 | 0 |
| ④ | 0.3 | 0 | 0 | 0 |
| ⑤ | 0.5 | 0 | 0 | 0 |

TABLE 2

| | T-D value | Rate of Occurence of Contact Defective (%) | | Cell Detachment Rate Due to Oscillation Experiment (%) |
|---|---|---|---|---|
| | | 50 times | 500 times | |
| ① | 0 | 3 | 7 | 35 |
| ② | 0.05 | 1 | 5 | 20 |
| ③ | 0.1 | 0 | 0 | 0 |
| ④ | 0.3 | 0 | 0 | 0 |
| ⑤ | 0.5 | 0 | 0 | 0 |

TABLE 3

| | Rate of Occurence of Contact Defective (%) | | Cell Detachment Rate Due to Oscillation Experiment (%) |
|---|---|---|---|
| | 50 times | 500 times | |
| Article according to the Present Invention | 0 | 0 | 0 |
| Conventional Article | 3 | 25 | 80 |

Further, the embodiment of the present invention illustrated in (TABLE 3) shows an example in which stainless steel having a wall thickness of 0.3 mm is used. However, the experiment revealed that, if material other than stainless steel such as nickel, copper, steel, phosphor bronze, brass, aluminium copper or the like having physical properties within a range according to the present invention, or a composite material, or a surface-treatment working or processing material, advantages similar to those of the experiment results shown in (TABLE 1), (TABLE 2) and (TABLE 3) are provided, and these materials can be used.

Fig. 11 shows a third embodiment of the present invention, and is a side elevational diagrammatic view showing an example in which a pair of terminal mounting elements 6 according to the present invention are provided on a circuit substrate 5. Fig. 11 shows a cell 1 in which a pair of plain-plate like terminals 7 thereof are mounted respectively on positive and negative pole terminal surfaces of the cell 1 and are inserted into a pair of terminal mounting elements provided on the circuit substrate. Similar experiments show that advantages similar to the aforesaid advantages can be produced, by the fact that the arrangements of the terminal mounting elements in this embodiment are similar to the other arrangements of the present invention.

**Claims**

1. A cell assembly comprising:

a cell (1) with terminal surfaces; and a pair of terminal elements (2, 3) attached to the terminal surfaces of the cell; characterised in that each of said terminal elements (2, 3) comprises an engaging portion (C) for receiving one of a pair of mating terminal elements of a device to which the cell assembly is to be attached; and that said engaging portion of each of said terminal elements comprises peripheral ends (2b, 3b) which are bent to form an interior region and a first surface (A) with an opening (A1), and a second surface (B) with a projection (2a, 3a; 2a', 3a') projecting partially into the interior region from the second surface (B).

2. A cell assembly as claimed in claim 1, characterised in that each of the projections (2a', 3a') comprises a spherical segment.

3. A cell assembly as claimed in claim 1 or claim 2, characterised in that the material of said terminal elements (2, 3) is metallic and has a wall thickness of 0.15 to 1.0 mm, a Vickers hardness of 250 to 450 HV and a spring elastic modulus of 30 to 60 kgf/mm$^2$.

4. A cell assembly as claimed in any preceding claim, characterised in that, for each terminal element (2, 3), the relationship between a distance D from forward end surfaces (A2, A3) of the peripheral ends (2b, 3b) forming a first surface (A) to a surface (B1; B1') of the projection (2a, 3a; 2a'; 3a') and a thickness T of one of a pair of mating terminal elements to which the terminal (2, 3) of the cell assembly is to be attached is given by

$$T - D \geq 0.1 \text{ to } 0.5.$$

5. A cell assembly as claimed in any preceding claim, characterised in that the material of the terminals (2, 3) is one selected from stainless steel, nickel, copper, steel, phosphor bronze, brass, aluminium copper, or a composite thereof, or a surface treatment working material thereof.

6. A circuit assembly comprising: a circuit substrate(5); and a pair of terminal elements (6) mounted on the substrate (5); characterised in that each of the terminal elements (6) comprises an engaging portion (c) for receiving one of a pair of mating terminal elements (7) of a cell (1) which is to be mounted on the substrate (5); and that the engaging portion of each of said terminal elements (6) comprises peripheral ends (2b, 3b) which are bent to form an interior region and a first surface (A) with an opening (A1), and a second surface (B) with a projection (2a, 3a; 2a', 3a') projecting partially into the interior region from the second surface (B).

7. A circuit assembly as claimed in claim 6, characterised in that each of the projections comprises a spherical segment.

8. A circuit assembly as claimed in claim 6 or claim 7, characterised in that the material of said terminal elements (6) is metallic and has a wall thickness of 0.15 to 1.0 mm, a Vickers hardness of 250 to 450 HV and a spring elastic modulus of 30 to 60 kgf/mm$^2$.

9. A circuit assembly as claimed in one of claims 6 to 8, characterised in that, for each terminal element (6), the relationship between a distance D from forward end surfaces of the peripheral ends forming a first surface to a surface of the projection and a thickness T of one of a pair of mating terminal elements to which the terminal (6) of the circuit assembly is to be attached is given by

$$T - D \geq 0.1 \text{ to } 0.5.$$

10. A circuit assembly as claimed in any one of claims 6 to 9, characterised in that the material of the terminals (6) is one selected from stainless steel, nickel, copper, steel, phosphor bronze, brass, aluminium copper, or a composite thereof, or a surface treatment working material thereof.

## Patentansprüche

1. Zellzusammenstellung aufweisend:
eine Zelle (1) mit Anschlußflächen; und ein Paar Anschlußelemente (2, 3), die mit den Anschlußflächen der Zelle verbunden sind; dadurch gekennzeichnet, daß jedes der Anschlußelemente (2, 3) einen Eingriffabschnitt (C) zur Aufnahme eines Elements von einem Paar zugehöriger Anschlußelemente einer Vorrichtung, mit der die Zellzusamenstellung verbunden werden soll, aufiveist; und daß der Eingriffabschnitt jeder der Anschlußelemente am Rand befindliche Enden (2b, 3b) aufweist, die gebogen sind, um einen Innenbereich und eine erste Fläche (A) mit einer Öffnung (A1), und eine zweite Fläche (B) mit einem Vorsprung (2a, 3a; 2a', 3a'), der von der zweiten Fläche (B) teilweise in den Innenbereich hineinragt, zu bilden.

2. Zellzusammenstellung nach Anspruch 1, dadurch gekennzeichnet, daß jeder der Vorsprünge (2a', 3a') ein sphärisches Segment aufweist.

3. Zellzusammenstellung nach Anspruch 1 oder 2, dadurch gekennzeichnet, daß das Material der Anschlußelemente (2, 3) metallisch ist und eine Wanddicke von 0,15 bis 1,0 mm, eine Vickershärte von 250 bis 450 HV und einen Elastizitätsmodul von 30 bis 60 kgf/mm$^2$ besitzt.

4. Zellzusammenstellung nach einem der vorstehenden Ansprüche, dadurch gekennzeichnet, daß für jedes Anschlußelement (2, 3) die Beziehung zwischen einem Abstand D von vorderen Endflächen (A2, A3) der eine erste Fläche (A) bildenden, am Rand liegenden Enden (2b, 3b) zu einer Fläche (B1; B1') des Vorsprungs (2a, 3a; 2a', 3a') und einer Dicke T eines Elements von einem Paar zugehöriger Anschlußelemente, mit welchem der Anschluß (2, 3) der Zellzusammenstellung verbunden werden soll, gegeben ist durch:

$$T - D \geq 0,1 \text{ bis } 0,5.$$

5. Zellzusammenstellung nach einem der vorstehenden Ansprüche, dadurch gekennzeichnet, daß das Material der Anschlüsse (2, 3) eines ist, das aus nichtrostendem Stahl, Nickel, Kupfer, Stahl, Phosphorbronze, Messing, Aluminium-Kupfer, oder einer Zusammensetzung von diesen, oder einem oberflächenbehandelten Material von diesen ausgewählt ist.

6. Zellzusammenstellung aufweisend: einen Schaltungsträger (5); und ein Paar von auf dem Träger montierten Anschlußelementen (6); dadurch gekennzeichnet, daß jedes der Anschlußelemente (6) einen Eingriffabschnitt (C) zur Aufnahme eines Elements von einem Paar zugehöriger Anschlußelemente (7) einer Zelle (1) aufweist, die auf dem Träger (5) angebracht werden soll; und daß der Eingriffabschnitt von jedem der Anschlußelemente (6) am Rand befindliche Enden (2b, 3b) aufweist, die gebogen sind, um einen Innenbereich und eine erste Fläche (A) mit einer Öffnung (A1), und eine zweite Fläche (B) mit einem Vorsprung (2a, 3a; 2a', 3a'), der von der zweiten Fläche (B) teilweise in den Innenbereich hineinragt, zu bilden.

7. Zellzusammenstellung nach Anspruch 6, dadurch gekennzeichnet, daß jeder der Vorsprünge ein sphärisches Segment aufweist.

8. Zellzusammenstellung nach Anspruch 6 oder 7, dadurch gekennzeichnet, daß das Material der Anschlußelemente (6) metallisch ist und eine Wanddicke von 0,15 bis 1,0 mm, eine Vickershärte von 250 bis 450 HV und einen Elastizitätsmodul von 30 bis 60 kgf/mm$^2$ besitzt.

9. Zellzusammenstellung nach einem der Ansprüche 6 bis 8, dadurch gekennzeichnet, daß für jedes Anschlußelement (6) die Beziehung zwischen einem Abstand D von vorderen Endflächen der eine erste Fläche bildenden, am Rand liegenden Enden zu einer Fläche des Vorsprungs und einer Dicke T eines Elements von einem Paar zugehöriger Anschlußelemente, mit welchem der Anschluß (6) der Zellzusammenstellung verbunden werden soll, gegeben ist durch:

$$T - D \geq 0,1 \text{ bis } 0,5.$$

10. Zellzusammenstellung nach einem der Ansprüche 6 bis 9, dadurch gekennzeichnet, daß das Material der Anschlüsse (6) eines ist, das aus nichtrostendem Stahl, Nickel Kupfer, Stahl, Phosphorbronze, Messing, Aluminium-Kupfer, oder einer Zusammensetzung von diesen, oder einem oberflächenbehandelten Material von diesen ausgewählt ist.

**Revendications**

1. Montage de pile comprenant :
   une pile (1) munie de surfaces de borne ; et une paire d'éléments de borne (2, 3) connectés aux surfaces de borne de la pile, caractérisé en ce que chacun desdits éléments de borne (2, 3) comprend une partie de coopération (C) pour recevoir l'un d'une paire d'éléments de borne appariés d'un dispositif auquel le montage de pile doit être fixé ; et en ce que ladite partie de coopération de chacun desdits éléments de borne comprend des extrémités périphériques (2b, 3b) qui sont recourbées pour former une région interne et une première surface (A) munie d'une ouverture (A1) et une seconde surface (B) munie d'une protubérance (2a, 3a ; 2a', 3a') faisant saillie partiellement à l'intérieur de la région interne depuis la seconde surface (B).

2. Montage de pile selon la revendication 1, caractérisé en ce que chacune des protubérances (2a', 3a') comprend un segment sphérique.

3. Montage de pile selon la revendication 1 ou 2, caractérisé en ce que le matériau desdits éléments de borne (2, 3) est métallique et présente une épaisseur de paroi de 0,15 à 1,0 mm, une dureté Vickers de 250 à 450 HV et un module d'élasticité de 30 à 60 kgf/mm$^2$.

4. Montage de pile selon l'une quelconque des revendications précédentes, caractérisé en ce que, pour chaque élément de borne (2, 3), la relation qui lie une distance D depuis des surfaces d'extrémité avant (A2, A3) des extrémités périphériques (2b, 3b) formant une première surface (A) jusqu'à une surface (B1 ; B1') de la protubérance (2a, 3a ; 2a' ; 3a') et une épaisseur T de celui d'une paire d'éléments de borne appariés auquel la borne (2, 3) du montage de pile doit être connectée est donnée par:

   $$T - D \geq 0,1 \text{ à } 0,5.$$

5. Montage de pile selon l'une quelconque des revendications précédentes, caractérisé en ce que le matériau des bornes (2, 3) est un matériau choisi parmi l'acier inoxydable, le nickel, le cuivre, l'acier, le bronze au phosphore, le laiton, l'aluminium/cuivre ou un composite de ceux-ci ou un matériau à base de ceux-ci ayant subi un traitement de surface.

6. Montage de circuit comprenant : un substrat de circuit (5) et une paire d'éléments de borne (6) montés sur le substrat (5), caractérisé en ce que chacun des éléments de borne (6) comprend une partie de coopération (c) pour recevoir l'un d'une paire d'éléments de borne appariés (7) d'une pile (1) qui doit être montée sur le substrat (5) ; et en ce que la partie de coopération de chacun desdits éléments de borne (6) comprend des extrémités périphériques (2b, 3b) qui sont recourbées de manière à former une région interne et une première surface (A) munie d'une ouverture (A1) et une seconde surface (B) munie d'une protubérance (2a, 3a ; 2a', 3a') faisant saillie partiellement à l'intérieur de la région interne depuis la seconde surface (B).

7. Montage de circuit selon la revendication 6, caractérisé en ce que chacune des protubérances comprend un segment sphérique.

8. Montage de circuit selon la revendication 6 ou 7, caractérisé en ce que le matériau desdits éléments de borne (6) est métallique et présente une épaisseur de paroi de 0,15 à 1,0 mm, une dureté Vickers de 250 à 450 HV et un module d'élasticité de 30 à 60 kgf/mm$^2$.

9. Montage de circuit selon l'une quelconque des revendications 6 à 8, caractérisé en ce que, pour chaque élément de borne (6), la relation qui lie une distance D depuis des surfaces d'extrémité avant des extrémités périphériques formant une première surface jusqu'à une surface de la protubérance et une épaisseur T de celui d'une paire d'éléments de borne appariés auquel la borne (6) du montage de circuit doit être connectée est donnée par :

   $$T - D \geq 0,1 \text{ à } 0,5.$$

10. Montage de circuit selon l'une quelconque des revendications 6 à 9, caractérisé en ce que le matériau des bornes (6) est un matériau choisi parmi l'acier inoxydable, le nickel, le cuivre, l'acier, le bronze au phosphore, le laiton, l'aluminium/cuivre ou un composite de ceux-ci ou un matériau à base de ceux-ci ayant subi un traitement de

surface.

# F I G. 1

# F I G. 2

# FIG. 3

# FIG. 4

# FIG. 5

# FIG. 6

# FIG. 7

F I G. 8

F I G. 9

# FIG. 10

# FIG. 11